# EUROPEAN PATENT APPLICATION

(11) **EP 1 724 951 A1**
(43) Date of publication of application: **22.11.2006**
(21) Application number: 05720040.4
(22) Date of filing: 04.03.2005
(51) Int. Cl.: H04B 10/10, H04B 7/26, H04M 1/737

(54) **PORTABLE TELEPHONE TERMINAL WITH VISIBLE LIGHT TRANSMITTER/RECEIVER**

(30) Priority: 09.03.2004 JP 2004066402
(71) Applicant: Nakagawa Laboratories, Inc., Tokyo 141-0031 (JP)
(72) Inventor: NAKAGAWA, Masao, Yokohama-shi, Kanagawa 2250001 (JP)
(74) Representative: Feldmeier, Jürgen
(86) International application number: PCT/JP2005/003768
(87) International publication number: WO 2005/086388

(57) **Abstract**

Near-distance interconnection of cellular phone terminals, which can easily correct axis misalignment. In two cellular phone terminals (130, 140), a visible light receiver (131) and a visible light emitter (132), and a visible light receiver (141) and a visible light emitter (142) are respectively provided side by side and oriented in the same direction. The visible light emitter (132) and the visible light receiver (141) face each other, and the visible light emitter (142) and the visible light receiver (131) also face each other, allowing visible light communication between near-distant cellular phones. Since the users can see the visible light used for communication, they can check whether the two terminals are coupled without axis misalignment. The visible light receivers (131, 141) can emit sufficiently strong visible light, using lasers or super luminescent diodes (SLDs), which can generate visible light modulated by data.

## Description

### TECHNICAL FIELD

Cellular phones are a key element supporting Japan's industries today. 70 million cellular phone terminals are being used in Japan. The cellular phone terminal does not only function as a telephone, but includes an infrared data reader and a camera to take pictures, and may even recognize images. Furthermore, having an RF-ID tag is becoming more frequent. Possession of a cellular phone terminal is equivalent to having a credit card, and even an identification card in some cases. The cellular terminal takes the market position of personal computers of the 1990s.

### BACKGROUND ART

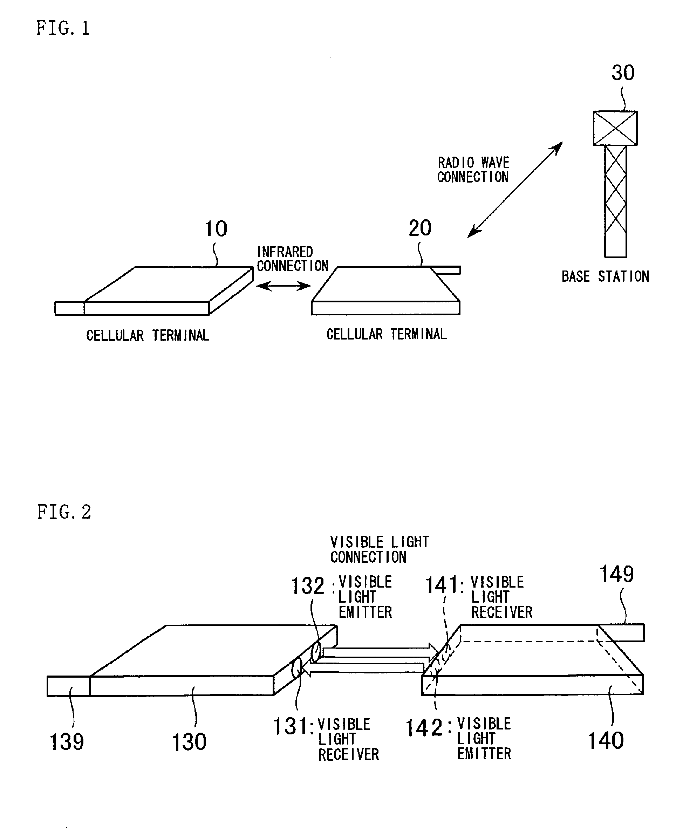

However, with current cellular phone terminal communication methods, either it connects to a base station by radio waves, or it connects to a nearby apparatus by infrared light. FIG. 1 shows a case where a cellular terminal is connected by infrared light to the nearby cellular phone terminal, which has an interface using infrared light compatible with that of the former cellular terminal and is further connected to a base station by radio waves. More specifically, a cellular terminal 20 is connected to a cellular terminal 10 by infrared light, as well as connected to a base station 30 by radio waves.

### DISCLOSURE OF THE INVENTION

### [Problem to be Solved by the Invention]

An interface using infrared light for a cellular phone terminal has a light emission diode (LED) creating infrared light with strong directivity, and also has a photodiode (PD) in a receiver converting the infrared light to an electrical signal. Connection via infrared light is appropriate for sending information to near-distance devices and receiving information therefrom.

However, although this connecting method is widely used for personal digital assistance (PDA) and personal computers (PCs), it is not used very often. This is because directivity of the infrared light is very strong, causing misalignment (of a transmission light axis and a reception light axis). In addition, even if misalignment occurs, it is difficult to correct since a user cannot notice the misalignment due to invisible infrared light. Therefore, infrared connection is utilized for many kinds of equipment since it is low-cost, but actual rate of utilization is low.

The objective of the present invention is to provide near-distance interconnection of cellular phone terminals that can easily correct axis misalignment, which is difficult by the above-mentioned connection via infrared light.

### [Means for Solving the Problem]

In order to achieve the above-given objective of the present invention, the present invention is a cellular phone terminal including a visible light receiver and a visible light emitter provided side by side and oriented in the same direction, capable of performing visible light communication.

It is favorable that the visible light emitter emits visible light with strong directivity.

### [Effects of the Invention]

Use of the above-given structure of the present invention allows the user(s) to see the light so as to check whether two terminals are coupled without axis misalignment, thereby easily correcting light axis misalignment if it occurs.

### BRIEF DESCRIPTION OF THE DRAWINGS

FIG. 1 is a diagram showing cellular phone terminals communicating with each other through conventional infrared data communication;
FIG. 2 is a diagram showing cellular phone terminals conducting visible light communication according to an embodiment of the present invention;
FIG. 3 is a functional block diagram showing visible light communication; and
FIG. 4 is a diagram showing a case of using light emitted from the cellular phone terminal as a laser pointer.

### BEST MODE FOR CARRYING OUT THE INVENTION

An embodiment of the present invention is described using appended drawings.

FIG. 2 is a diagram explaining a general structure of the embodiment of the present invention. In FIG. 2, two cellular phone terminals 130 and 140 are capable of performing visible light communication, and a visible light receiver 131 and a visible light emitter 132, and a visible light receiver 141 and a visible light emitter 142 are respectively provided side by side and oriented in the same direction. In this case, the visible light receivers 131 and 141 can emit sufficiently strong visible light, using lasers or super luminescent diodes (SLDs), which can generate visible light modulated by data. The SLDs are light emitting elements providing both the almost same high intensity as laser diodes and the almost same low coherence as LEDs. Note that the SLDs provide sufficient directivity using a lens system. Use of such visible light allows easy correction of axis misalignment by sight, and relatively longer communication distance than when using infrared light.

Note that use of a laser allows higher speed modulation than when using typical LEDs, and allows modulation of Gbps or greater. Since there is hardly any distance attenuation due to strong directivity, nor any multipaths as long as the near-distance is, for example, several meters, ultrahigh-speed transmission of several Gbps is possible, as well as data transfer for an extremely short time as with a wired connection.

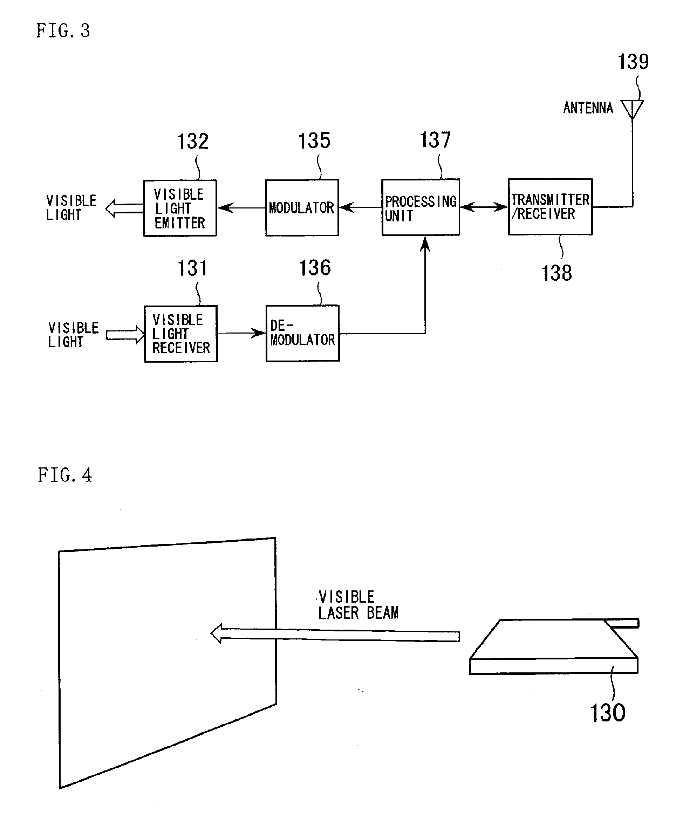

FIG. 3 is a block diagram showing parts within the cellular phone terminal 130 relating to visible light communication. When the visible light receiver 131 receives light, this light is converted to an electrical signal, demodulated into data by a demodulator 136, and then processed by a processing unit 137. Furthermore, the data from the processing unit 137 is modulated by a modulator 135 and then converted to visible light by the visible light receiver 132. Although the cellular phone terminal 130 also has a transmitter/receiver 138 and an antennal 139 for existing radio waves, description of structures of these other parts is omitted.

As shown in FIG. 2, the cellular phone terminals 130 and 140 have the visible light emitter 132 and the visible light receiver 141 facing each other, and the visible light emitter 142 and the visible light receiver 131 facing each other, allowing visible light communication between near-distant cellular phones. At this time, since the users can see the visible light used for communication, they can check whether the two terminals are correctly coupled without axis misalignment. Even if the light axis of the visible light used for the communication is misaligned and communication fails, correction of the light axis misalignment is still easy by sight.

FIG. 4 shows a case of using visible light with strong directivity emitted from the visible light emitter 132 of the cellular phone as a laser pointer. This kind of usage is possible when using sufficiently strong visible light with directivity for communication.

Visible light communication is not only used for communication between the cellular phone terminals 130 and 140 as shown in FIG. 2, but may also be used for communication between a different device and a cellular phone terminal. For example, visible light receiver and emitter may be provided to an advertisement to be affixed to a wall or the like, allowing transmission of information related to the advertisement from the advertisement side to a cellular phone terminal capable of visible light communication. At this time, use of visible light with strong directivity for communication allows reception of information from a desired advertisement even if there are multiple advertisements. Furthermore, this allows satisfactory reception of information even if the advertisement and the cellular phone terminal are far apart.

In the case where the visible light communication on the advertisement side is connected to a communication network, an order for a product or the like may be placed by selectively transmitting visible light with strong directivity from the cellular phone terminal side to the advertisement side.

## Claims

1. A cellular phone terminal, comprising: a visible light receiver and a visible light emitter provided side by side and oriented in the same direction; capable of performing visible light communication.

2. The cellular phone terminal, wherein the visible light emitter emits visible light with strong directivity.
